Europäisches Patentamt

European Patent Office

Office européen des brevets

(19)

(11) Publication number: 0 233 661
A1

(12) **EUROPEAN PATENT APPLICATION**

(21) Application number: 87200094.8

(22) Date of filing: 22.01.87

(51) Int. Cl.⁴: **B29C 47/76 , B29B 7/84 ,** C08F 6/00

(30) Priority: 23.01.86 NL 8600144

(43) Date of publication of application: 26.08.87 Bulletin 87/35

(84) Designated Contracting States: AT BE CH DE ES FR GB IT LI NL SE

(71) Applicant: STAMICARBON B.V. Mijnweg 1 NL-6167 AC Geleen(NL)

(72) Inventor: Lardinoye, Hendrikus Hubertus Maria Scheumerbeek 17 NL-6166 GZ Geleen(NL) Inventor: Kleintjens, Ludovicus Anna Leonard Tossaintstr. 5 NL-6171 HN Stein(NL) Inventor: Vonken, Hubertus Herman Barbara Hellebroek 74 NL-6361 AD Nuth(NL)

(74) Representative: Hoogstraten, Willem Cornelis Roeland et al OCTROOIBUREAU DSM Postbus 9 NL-6160 MA Geleen(NL)

(54) Process for purifying a thermoplastic polymer.

(57) Claimed is a process for purifying a thermoplastic polymer via a treatment of the polymer with a gas or gas mixture at a temperature and pressure near the gas-liquid critial point, the process being characterized in that the treatment of the polymer with the said gas or gas mixture is carried out in an extruder.

## PROCESS FOR PURIFYING A THERMOPLASTIC POLYMER

The invention relates to a process for purifying a thermoplastic polymer via a treatment of the polymer with a gas or gas mixture at a temperature and pressure near the gas-liquid critical point.

Such a process has been described for a number of polymers to purify these from monomer residues, solvent, water and other impurities still present. Thus in EP-B 142 894 a process is described for purifying a rubber built up from at least ethylene groups, $\alpha$-alkene groups with 3-8 C-atoms per group and diene groups, by treating it with such a gas or gas mixture. Such a treatment will be called here and hereinafter a supercritical extraction.

A disadvantage of the said supercritical extraction processes is that generally the processes are carried out substantially batchwise, the purified polymer having to be removed, after the treatment, from the high-pressure extractor applied. The processes known for such removal are usually batchwise in design. This is due to the fact that the semi-continuous or continuous removal of a polymer from the high-pressure extractor in which the supercritial extraction is carried out constitutes a mostly insuperable technical obstacle. In the present state of the art removal systems for the removal of solids are indeed known per se, in which connection reference is made to VDI-Berichten no. 409, 1981, and US-A-3,190,701.

In the removal of polymers, however, special problems may occur connected with the morphology and the free-flowing characteristics, the hardness and brittleness of the polymer, which may result in wearing of parts like valves and other moving parts.

Moreover, care must be taken that, before the removal of the extracted polymer to an environment of atmospheric pressure, it is cleared of the extract phase, which may yet be laden with the extracted impurities. To this end, for instance, flushing or washing with pure extractant will be necessary in practice. This will result in a loss of extractant, as well as in extra compression costs of extractant to be newly supplied.

In the process according to the invention these disadvantages are met by purifying the polymer in a semi-continuously or continuously operated extruder. In this process the separation between the extractant and the polymer takes place irreversibly at the extruder head or vent so that hardly any or no impurities are taken up by the polymer any more.

The process according to the invention is therefore characterized in that the treatment of the polymer with the said gas or gas mixture is carried out in an extruder.

Under the said process conditions the gas or gas mixture to be applied, such as, for instance, $SO_2$, $N_2O$, $NO_2$, $NO$, $CO$, $CH_4$, $CO_2$, ethane, propane, ethylene, propylene, is a so-called supercritical extractant. Supercritical means that the process takes place at a temperature near the critical temperature of the gas or gas mixture and at a pressure near the critical pressure of the gas or gas mixture. For practical reasons preference is given to working in the optimum working range for supercritical extractants, which is bounded by a $T_r$ of 0.9-1.5 at a $P_r \geq 0.9$, where $T_r$ is the reduced temperature, which is by definition the ratio between the process temperature and the critical temperature (both expressed in K), and $P_r$ the reduced pressure, which is by definition the ratio between the process pressure and the critical pressure. Outside this working range, towards lower $T_r$ and/or $P_r$ values, small changes in pressure and/or temperature may result in a strong decrease of the dissolving power of the extractants.

The supercritical extractant applied is preferably a gas or gas mixture consisting of $CO_2$ and/or ethylene and/or propylene. Particularly $CO_2$ is used, because it is non-toxic, non-flammable, not harmful to the environment, and cheap.

The amount of gas or gas mixture used in the process according to the invention can be chosen, for instance, between 1 and 500 $Nm^3$ (NPT) gas per kg polymer to be purified and is determined by the degree of purification aimed at.

The temperature to be applied in the process according to the invention may be higher as well as lower than the melting temperature of the polymer (if there is any question of it), but must not be above the decomposition temperature. The lower temperature limit is determined on the one side because the $T_r$ must preferably not be chosen below 0.9 and will on the other hand depend on the processing characteristics of the polymer at low temperatures.

The process pressure to be applied in the process according to the invention will at least have to be 0.9 times the critical pressure of the extractant to be used, but will preferably have a value of 3-300 MPa.

Examples of polymers suitable for purification by means of the process according to the invention are:

    a. styrene polymers and copolymers based on polybutadiene or SBR and styrene

b. polyesters, such as polyethylene terephthalate

    c. aromatic polycarbonates

    d. polyester carbonates

    e. alkylacrylate polymers

    f. polyurethanes

    g. polyhydroxy ethers

    h. polyolefines, including ethylene-$\alpha$-alkene polymers

    i. polyamides

    j. PVC.

In this connection special examples are: rubber, including EPDM (ethylene-propylene-diene copolymer), polyethylene, polypropylene, nylon-6, nylon-4.6, ABS (acrylonitrile-butadiene-styrene copolymer), SAN (styrene-acrylonitrile copolymer), polystyrene, SMA (styrene-maleic anhydride copolymer), PMMA (poly-methyl-methacrylate). Generally, the polymers to be purified must comply with the characteristics of being capable of being processed via an extruder. Mixtures of polymers, too, can be purified according to the process of the invention. EPDM in particular can be purified via such a process.

Each polymer has its own specific pattern of impurities. However, by using an extruder suitable for the said process conditions the person skilled in the art can determine in a simple manner the optimum process conditions for the relative polymer.

The requirements which the extruder must comply with are:
-from the metering point of the gas or gas mixture as far as the extruder head the temperature and pressure control must be as constant as possible and at supercritical values
-the gas or gas mixture must be brought into good contact with the polymer to be extracted
-the yield must be constant and being well regulated so that the desired residence time of the polymer in the extruder can be realized in order to reach the desired purification.

The extruder to be used may be a single as well as a twin-screw extruder, of which the latter may have co-rotating as well as contra-rotating screws.

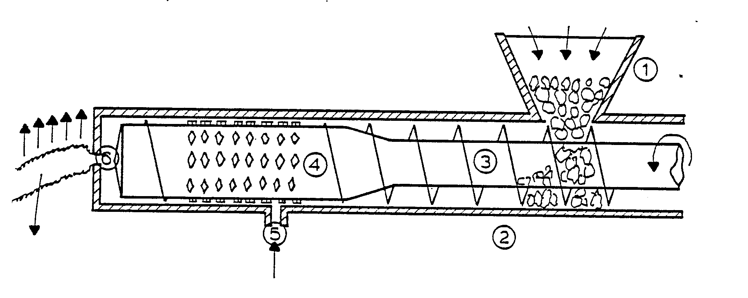

The invention will be further elucidated with reference to figure 1.

Impure polymer is supplied, for instance via a hopper (1), to an extruder (2). The extruder screw is built up from a feed zone (2), compression zone (3) and an injection/metering zone (4). In the processing of polymers a one-zone screw (just transport), or a two-zone screw (feed zone + injection/metering zone), can be used. In this extruder the polymer is put under pressure and heated up to the desired temperature.

The extractant is injected via an injection point (5) so that the impurities from the polymer can be dissolved in the supercritical extractant.

The extruder screw conveys this polymer-gas mixture forward to the head (6), where it expands to atmospheric conditions. The gas or gas mixture with the impurities dissolved in it escapes in the form of a gas, while the purified polymer is left and can be processed further.

By choosing a specific screw design, in combination with the speed of the extruder screw, the residence time of the polymer in the extractor/extruder can be regulated.

The escaping gas phase and the impurities contained therein can be separated from each other via separation techniques known in the art, upon which the gas thus purified can be returned to the extruder.

The invention will be further elucidated by means of the following examples.

The extruder used is a single-screw measuring extruder (Schwabenthan, with D = 30 mm) provided with a hopper, a 3-zone screw (L = 33 D), capillary head (dia. 1.7 mm) and an injection unit for the extractant at 20 D from the hopper. The 3-zone screw applied is built up as follows:
-feed zone L = 10 D, h = 3.6 mm
-compression zone L = 8 D
-metering zone L = 15 D,
of which -mixing section L = 5 D H = 2.4 mm
-transport section L = 10 D.
All experiments have been done at a screw speed of 20 rpm. In all experiments, in which $CO_2$ is used as an extractant, the polymer : $CO_2$ mass flow ratio has a value of 1.
All percentages mentioned are percentages by weight.

Example I

As starting material highly impure EPDM rubber is taken, containing 54 % water ($H_2O$), 1,17 % organic solvent ($C_6$), 0.26 % ethylidenorbornene - (EN) and 0.65 % dicyclopentadiene (DCPD). The extraction treatment is carried out at 72°C and at a pressure of 165 bar with an extrusion yield of 15.2 grammes/min.

After this extraction treatment in the extruder, in which treatment the materials has been in contact with the $CO_2$ for 2 min. and 5 sec. on average, the extracted material contains 2 % $H_2O$, 0.22 % $C_6$, 0.14 % EN and 0,38 % DCPD.

## Comparative example A

As starting material the same material is taken as in example I. The material is just extruded and consequently not treated during the processing with $CO_2$. The extrusion is carried out at 64¤C and at a pressure of 175 bar with a yield of 5.2 grammes/min.

After this extrusion treatment the material still contains 4 % $H_2O$, 0.83 % $C_6$, 0.26 % EN and 0.60 % DCPD.

## Example II

As starting material moderately impure EPDM rubber is taken. This material contains 22 % $H_2O$, 0.67 % $C_6$, 0.26 % EN and 0.65 % DCPD. The extraction treatment is carried out at 75¤C and at a pressure of 175 bar with an extrusion yield of 16.8 grammes/min.

After this extraction treatment in the extruder, in which treatment the polymer has been in contact with the $CO_2$ for 2 min. and 25 sec. on average, the extracted material contains 2 % $H_2O$, 0.22 % $C_6$, 0.18 % EN and 0.53 % DCPD.

## Comparative example B

As starting material the same material is taken as in example II. The material is just extruded and consequently not treated during the processing with $CO_2$. The extrusion is carried out at 75¤C and at a pressure of 160 bar with a yield of 14.6 grammes/min.

After this extrusion treatment the material still contains 4 % $H_2O$, 0.69 % $C_6$, 0.24 % EN and 0.60 % DCPD.

## Example III

As starting material an impure styrene-acrylonitrile copolymer (SAN) is taken. This material contains 0.53 % acrylonitrile (ACN), 2.27 % styrene (ST) and 0.12 % other impurities such as hydroxypropionitrile and acrylamide (OOV). The extraction treatment is carried out at a temperature of 100¤C and a pressure of 180 bar with an extrusion yield of 30 grammes/min.

After this extraction treatment in the extruder, in which treatment the material has been in contact with the $CO_2$ for 2 min. on average, the extracted material contains 0.05 % ACN, 0.20 % ST and less than 0.01 % OOV.

## Example IV

As starting material the same material is taken as in example III. The extraction treatment is carried out at a temperature of 100¤C and a pressure of 180 bar with an extrusion yield of 15 grammes/min.

After this extraction treatment in the extruder, in which treatment the material has been in contact with the $CO_2$ for 4 min. on average, the extracted material contains less than 0.01 % ACN, less than 0.01 % ST and less than 0.01 % OOV.

## Example V

As starting material the same material is taken as in example III. The extraction treatment is carried out at a temperature of 70¤C and at a pressure of 300 bar with an extrusion yield of 15 grammes/min.

After this extraction treatment in the extruder, in which treatment the material has been in contact with $CO_2$ for 4 min. on average, the extracted material contains less than 0.01 % ACN, less than 0.01 % ST and less than 0.01 % OOV.

## Claims

1. Process for purifying a thermoplastic polymer via a treatment of the polymer with a gas or gas mixture at a temperature and pressure near the gas-liquid critial point, the process being characterized in that the treatment of the polymer with the said gas or gas mixture is carried out in an extruder.

2. Process according to claim 1, characterized in that the gas or gas mixture to be applied is $CO_2$, propylene or ethylene or mixtures of two or all three of these gases.

3. Process according to claim 2, characterized in that the gas or gas mixture to be applied is $CO_2$.

4. Process according to any one of claims 1-3, characterized in that the process is used for purifying EPDM.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | NL-A-7 707 502 (EXXON) * Whole document * | 1-4 | B 29 C 47/76 B 29 B 7/84 C 08 F 6/00 |
| X | US-A-4 198 265 (JOHNSON) * Whole document * | 1 | |
| X | US-A-3 799 234 (SKIDMORE) * Whole document * | 1 | |
| X | US-A-3 683 511 (JOHNSON) * Whole document * | 1,4 | |
| A | DE-A-3 323 940 (HOECHST) * Claims * | 1-3 | |
| A | EP-A-0 068 561 (STAMICARBON) * Whole document * | 1 | TECHNICAL FIELDS SEARCHED (Int. Cl.4) B 29 B B 29 C C 08 F |
| A,D | EP-A-0 142 894 (STAMICARBON) * Whole document * | 1 | |

The present search report has been drawn up for all claims

| Place of search | Date of completion of the search | Examiner |
|---|---|---|
| THE HAGUE | 06-05-1987 | KUSARDY R. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82